# EUROPÄISCHE PATENTSCHRIFT

(11) **EP 3 101 318 B1**
(45) Veröffentlichungstag und Bekanntmachung des Hinweises auf die Patenterteilung: **17.10.2018**
(21) Anmeldenummer: 16169836.0
(22) Anmeldetag: 17.05.2016
(51) Int. Cl.: F16K 27/00, F16L 41/03

(54) **VENTILMODUL**
VALVE MODULE
MODULE DE VANNE

(30) Priorität: 02.06.2015 DE 102015210211
(43) Veröffentlichungstag der Anmeldung: 07.12.2016
(73) Patentinhaber: GEMÜ Gebr. Müller Apparatebau GmbH & Co. Kommanditgesellschaft, 74653 Ingelfingen (DE)
(72) Erfinder: Frankenbach, Klaus, 74670 Forchtenberg-Schleierhof (DE)
(74) Vertreter: DREISS Patentanwälte PartG mbB

(56) Entgegenhaltungen:
- EP-A2- 0 715 112
- DE-U1-202004 007 669

## Beschreibung

Die Erfindung betrifft ein Ventilmodul nach dem Oberbegriff des Anspruchs 1.

Derartige Ventilmodule sind generell im Stand der Technik bekannt. Der Begriff Ventilmodul bezeichnet dabei ein Bauteil, das zusammen mit weiteren baugleichen oder bauähnlichen Bauteilen zu einem modularen Ventilsystem zusammengesetzt werden kann. Die einzelnen Ventilmodule verfügen über einen Ventilsitz und sind mit einem Antrieb verbindbar. Das Ventilmodul dient der Medienführung, bildet also Kanäle für ein zu führendes strömbares Medium. Der Ventilsitz arbeitet mit einem Ventilelement zusammen, welches je nach Betriebsstellung einen Kanal in dem Ventilmodul sperrt bzw. öffnet. Die mechanische Betätigung des Ventilsitzes erfolgt über den Antrieb.

Modulare Ventilsysteme finden beispielsweise als Flüssigkeitsverteiler oder generell als Verteiler für strömbare Medien Anwendung. Modular bedeutet in diesem Zusammenhang, dass das modulare Ventilsystem aus einer beliebigen bzw. variablen Anzahl an Ventilmodulen zusammensetzbar ist. Hierzu ist es notwendig, dass die einzelnen Ventilmodule miteinander verbindbar sind. Modulare Ventilsysteme sind beispielsweise aus der EP 2 636 933 A1, der DE 10 2013 104 688 A1 und der EP 1 179 156 A1 bekannt. Das DE 20 2004 007 669 U1 beschreibt eine Anordnung aus mehreren Verteilerventilen, die in unterschiedlichen Winkelpositionen zueinander verschraubt werden können. Die EP 0 715 112 A2 offenbart eine Anordnung bestehend aus mehreren Verteilerstücken, die miteinander in unterschiedlichen Winkelpositionen verrastet werden können.

Aufgabe der vorliegenden Erfindung ist es, ein Ventilmodul zu schaffen, das es erlaubt, ein modulares Ventilsystem auf einfache und flexible Weise aus mehreren erfindungsgemäßen Ventilmodulen zusammenzusetzen.

Diese Aufgabe wird durch ein Ventilmodul mit den Merkmalen des Anspruchs 1 gelöst. Vorteilhafte Weiterbildungen der Erfindung sind in den Unteransprüchen genannt. Außerdem finden sich für die Erfindung wichtige Merkmale in der nachfolgenden Beschreibung und in der Zeichnung, wobei diese Merkmale sowohl in Alleinstellung als auch in unterschiedlicher Kombination für die Erfindung wichtig sein können.

Erfindungsgemäß weist der erste Anschlussbereich mindestens drei erste Verbindungsabschnitte auf und diese und der mindestens eine zweite Verbindungsabschnitt sind derart ausgebildet und angeordnet, dass das Ventilmodul mit dem zweiten Ventilmodul in Umfangsrichtung um den Hauptkanal gesehen in unterschiedlichen Stellungen verbindbar ist, wobei in den jeweiligen Stellungen der mindestens eine zweite Verbindungsabschnitt des Ventilmoduls jeweils gegenüber einem unterschiedlichen ersten Verbindungsabschnitt des zweiten Ventilmoduls in einer Verbindungsposition steht. Die ersten Verbindungsabschnitte sind durch an das Gehäuse angeformte und in etwa zylindrische Erweiterungen ausgestaltet, und die zweiten Verbindungsabschnitte sind durch an das Gehäuse angeformte ohrenartige Laschen ausgestaltet.

Dies hat den Vorteil, dass zwei erfindungsgemäße Ventilmodule, je nach gewünschter Einbaulage, in zueinander verschieden orientierten, gleichwohl vordefinierten Stellungen miteinander verbunden werden können. Dabei ermöglichen die außen liegenden und somit jederzeit zugänglichen Verbindungsabschnitte eine sichere Verbindung der beiden Ventilmodule miteinander.

Im Sinne der vorliegenden Erfindung stehen ein erster Verbindungsabschnitt und ein zweiter Verbindungsabschnitt dann miteinander in einer Verbindungsposition, wenn sich die beiden Ventilmodule mittels der Verbindungsabschnitte lösbar miteinander verbinden lassen, im Sinne von aneinander befestigen lassen. Eine solche Verbindung bzw. Befestigung kann durch eine direkte Befestigung mittels der Verbindungsabschnitte realisiert werden, beispielsweise können die Verbindungsabschnitte ineinander einrasten oder einhaken. Im Sinne der vorliegenden Erfindung stehen ein erster Verbindungsabschnitt und ein zweiter Verbindungsabschnitt aber auch dann miteinander in einer Verbindungsposition, wenn sie sich beispielsweise über eine Schraube oder eine Bügelschraube gegeneinander verspannen bzw. miteinander verbinden lassen.

Im Sinne der vorliegenden Erfindung ist insbesondere, wenn der erste Anschlussbereich und der zweite Anschlussbereich derart komplementär ausgebildet sind, dass der zweite Anschlussbereich des Ventilmoduls in den beispielsweise muffenartig ausgebildeten ersten Anschlussbereich des im Wesentlichen identischen zweiten Ventilmoduls eingesteckt werden kann und diese gesteckte Verbindung durch ein Verbinden des zweiten Verbindungsabschnitts des Ventilmoduls mit dem ersten Verbindungsabschnitt, mit welchem er in der Verbindungsposition steht, beispielsweise durch eine Schraube gegen ein unbeabsichtigtes Lösen gesichert werden kann, wobei dies in verschiedenen Winkelstellungen für verschiedene erste Verbindungsabschnitte möglich ist.

Von Vorteil ist, wenn der mindestens eine zweite Verbindungsabschnitt eine, vorzugsweise zylindrisch ausgebildete, zweite Öffnung mit einer zweiten Öffnungsachse aufweist. Dies ermöglicht beispielsweise die Verwendung einer Schraube, welche durch die Öffnung in dem zweiten Verbindungsabschnitt bzw. den zweiten Verbindungsabschnitten geführt werden kann, um den zweiten Verbindungsabschnitt mit dem ersten Verbindungsabschnitt zu verbinden bzw. an diesem zu befestigen.

Vorteilhaft ist auch, wenn die ersten Verbindungsabschnitte je eine, vorzugsweise zylindrisch ausgebildete, erste Öffnung mit je einer ersten Öffnungsachse aufweisen. Dies ermöglicht beispielsweise die Verwendung von Schrauben oder Klemmen, in analoger Weise wie eben in Bezug auf die zweiten Verbindungsabschnitte beschrieben.

Von Vorteil ist dabei insbesondere, wenn sowohl die ersten Verbindungsabschnitte als auch die zweiten Verbindungsabschnitte die eben beschriebenen Öffnungen aufweisen. Hierdurch wird es ermöglicht, Schrauben durch beide Öffnungen durchzuführen, um die Verbindungsabschnitte aneinander zu befestigen. Sind beispielsweise beide Öffnungen als Durchgangsöffnungen ausgeführt, so ist es vorteilhaft, wenn die Öffnungen eines ersten Verbindungsabschnitts und eines zweiten Verbindungsabschnitts, die in einer Verbindungsposition stehen, derart zueinander ausgerichtet sind, dass eine Schraube durch beide Öffnungen durchgeführt werden kann und mittels einer Schraubenmutter der erste Verbindungsabschnitt gegen den zweiten Verbindungsabschnitt verspannt werden kann.

Vorteilhaft ist auch, wenn die Öffnungsachsen eines ersten Verbindungsabschnitts und eines zweiten Verbindungsabschnitts, die miteinander in der Verbindungsposition stehen, zueinander fluchtend angeordnet sind, wodurch die schraubenbasierte Verbindung in der bereits oben beschriebenen Art und Weise möglich wird. Alternativ können die Öffnungsachsen aber auch nebeneinander angeordnet sein, so dass zum Sichern eine Bügelschraube oder eine Steckklammer oder etwas ähnliches verwendet werden kann.

Im Sinne der Erfindung ist dabei auch, wenn entweder die ersten Öffnungen oder die mindestens eine zweite Öffnung jeweils ein Innengewinde aufweisen. Ist beispielsweise die Öffnung in dem zweiten Verbindungsabschnitt als Durchgangsöffnung ausgeführt und die Öffnungen in den ersten Verbindungsabschnitten tragen jeweils ein Innengewinde, so können Verbindungsabschnitte, die in der Verbindungsposition zueinander stehen, dadurch miteinander verbunden werden, dass eine zu dem Innengewinde passende Schraube durch die Öffnung in dem zweiten Verbindungsabschnitt hindurchgesteckt und in das Innengewinde in dem ersten Verbindungsabschnitt eingeschraubt wird. Der Kopf der Schraube presst dann den zweiten Verbindungsabschnitt an den ersten Verbindungsabschnitt an, wodurch die beiden Verbindungsabschnitte miteinander verbunden bzw. aneinander befestigt werden.

Von Vorteil ist überdies, wenn ein erster Verbindungsabschnitt und ein zweiter Verbindungsabschnitt, die miteinander in der Verbindungsposition stehen, direkt aneinander angrenzen, wodurch beispielsweise durch einen gewissen Reibschluss der Verbindungsabschnitte eine besonders zuverlässige Verbindung der beiden miteinander zu verbindenden Ventilmodule ermöglicht wird. Alternativ können die Verbindungsabschnitte aber auch voneinander beabstandet sein.

Im Sinne der Erfindung ist auch, wenn der erste Anschlussbereich mindestens vier (oder sechs, acht, zehn, ...) erste Verbindungsabschnitte aufweist, von denen je zwei erste Verbindungsabschnitte ein Paar bilden, und der zweite Anschluss mindestens zwei zweite Verbindungsabschnitte aufweist, die ein Paar bilden, wobei Verbindungsabschnitte eines Paares jeweils bezüglich einer Hauptachse diametral gegenüberliegend voneinander angeordnet sind. Diese Ausführungsform der Erfindung hat den Vorteil, dass, wenn ein erster Verbindungsabschnitt mit einem zweiten Verbindungsabschnitt in der Verbindungsposition steht, zwangsläufig auch ein dem ersten Verbindungsabschnitt diametral gegenüberliegender weiterer erster Verbindungsabschnitt mit einem weiteren zweiten Verbindungsabschnitt in der Verbindungsposition steht, was eine besonders zuverlässige Verbindung zweier Ventilmodule ermöglicht.

Von Vorteil ist dabei, wenn die mindestens vier ersten Verbindungsabschnitte in Umfangsrichtung gleichmäßig verteilt um die Hauptachse angeordnet sind, sodass die vier Stellungen, in welchen das Ventilmodul mit einem im Wesentlichen identischen zweiten Ventilmodul verbindbar ist, jeweils um 90° versetzt zueinander sind. Hierdurch wird eine besonders hohe Flexibilität in der Aufbauweise eines Ventilsystems geschaffen. Mehrere Ventilmodule können jeweils um 90° zueinander versetzt orientiert miteinander verbunden werden.

Vorteilhafterweise ist der Hauptkanal im Wesentlichen zylindrisch ausgebildet. Von Vorteil ist auch, wenn der Nebenkanal im Wesentlichen zylindrisch ausgebildet ist. Eine zylindrische Ausbildung des Hauptkanals und/oder des Nebenkanal ermöglicht eine kostengünstige Herstellung des Ventilmoduls.

In einer Weiterbildung der Erfindung umfasst das Ventilmodul einen Anschlussabschnitt zum Anschließen eines Ventilantriebs, welcher vorzugsweise derart ausgebildet ist, dass der Ventilantrieb im angeschlossenen Zustand in einer zu der Hauptachse orthogonal angeordneten Ebene angeordnet ist.

Teil der Erfindung ist auch ein modulares Ventilsystem umfassend mindestens ein erstes Ventilmodul einer oder mehrerer der eben beschriebenen Ausführungsformen und ein zweites im Wesentlichen identisches Ventilmodul, wobei das erste Ventilmodul mit dem zweiten Ventilmodul derart in unterschiedlichen Stellungen verbindbar ist, dass in den jeweiligen unterschiedlichen Stellungen die zweite Verbindungsabschnitt des ersten Ventilmoduls jeweils mit einer unterschiedlichen ersten Verbindungsabschnitt des zweiten Ventilmoduls in einer Verbindungsposition steht.

Nachfolgend wird die Erfindung anhand der beiliegenden Zeichnung erläutert. In dieser zeigen:
Figur 1 eine perspektivische Darstellung einer ersten Ausführungsform eines Ventilmoduls;
Figur 2 eine perspektivische Darstellung des Ventilmoduls von Figur 1, wobei das Ventilmodul um 180° gedreht ist;
Figur 3 eine Seitenansicht auf das Ventilmodul von Figur 1;
Figur 4 einen Längsschnitt durch das Ventilmodul von Figur 1;
Figur 5 einen Schnitt durch das Ventilmodul von Figur 1, wobei die Schnittebene außermittig und abgewinkelt ist;
Figur 6 eine Vorderansicht auf eine zweite Ausführungsform eines Ventilmoduls;
Figur 7 einen Längsschnitt durch das Ventilmodul von Figur 6;
Figur 8 eine perspektivische Darstellung von zwei zusammen montierten Ventilmodulen gemäß Figur 6 zusammen mit zwei Flanschelementen;
Figur 9 eine perspektivische Darstellung von sechs zusammen montierten Ventilmodulen gemäß Figur 6; und
Figur 10 eine Seitenansicht auf die Ventilmodule von Figur 9.

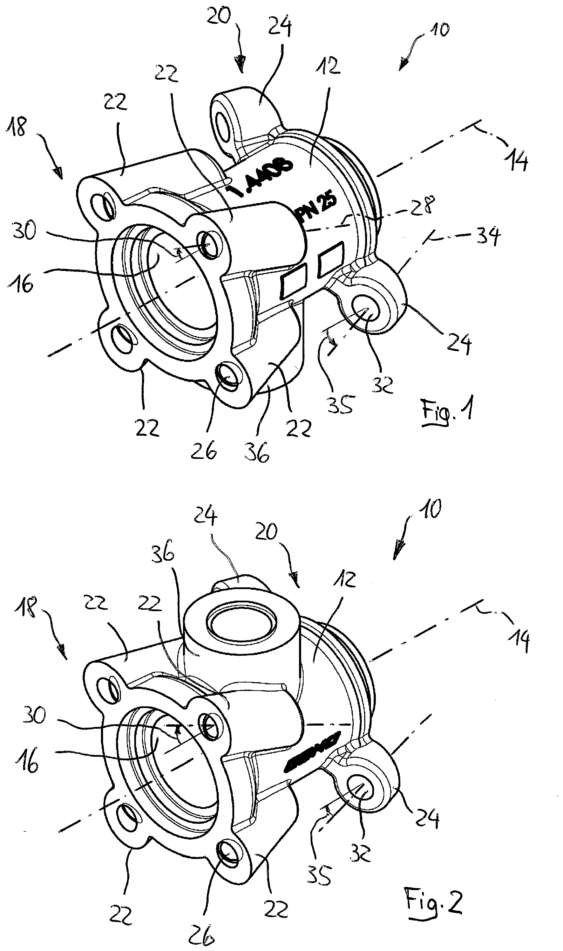

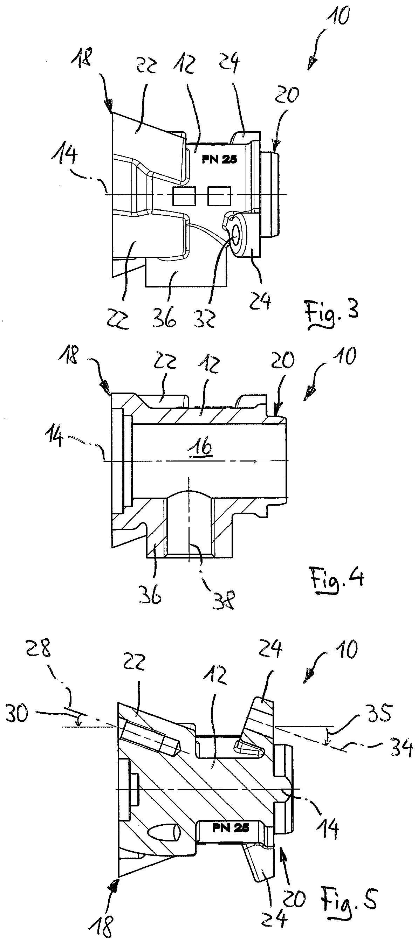

Ein Ventilmodul trägt in den Figuren 1-5 insgesamt das Bezugszeichen 10. Er umfasst ein Gehäuse 12 sowie ein vorliegend nicht gezeichnetes Ventilelement und einen das Ventilelement betätigenden Antrieb, der ebenfalls nicht gezeichnet ist. Das Gehäuse ist rohrartig aufgebaut mit einem längs zu einer Längsachse 14 des Gehäuses 12 in diesem verlaufenden Hauptkanal 16.
Im Bereich der einen und in den Figuren 1 und 2 vorderen Stirnseite des Gehäuses 12 ist ein erster Anschlussbereich 18 vorhanden, im Bereich der entgegengesetzt angeordneten Stirnseite ein zweiter Anschlussbereich 20. Während der erste Anschlussbereich 18 in der Art einer Muffe ausgebildet ist, ist der zweite Anschlussbereich 20 hierzu komplementär in der Art eines Stutzens ausgebildet. Auf diese Weise kann der zweite Anschlussbereich 20 eines Ventilmoduls 10 in den ersten Anschlussbereich 18 eines anderen Ventilmoduls 10 eingesteckt werden. Der Hauptkanal 16 verläuft vom ersten Anschlussbereich 18 zum zweiten Anschlussbereich 20 (siehe Figur 4).

Der erste Anschlussbereich 18 weist vier über seinen Umfang gleichmäßig, also in einem Winkelabstand von 90°, verteilt angeordnete erste Verbindungsabschnitte 22 auf, die durch an das Gehäuse 12 angeformte und in etwa zylindrische Erweiterungen ausgestaltet sind. Bei einer nicht gezeichneten Ausführungsform weist der erste Anschlussbereich mehr als vier über seinen Umfang verteilt angeordnete erste Verbindungsabschnitte auf. Grundsätzlich sollten mindestens drei erste Verbindungsabschnitte vorhanden sein. Jeweils zwei erste Verbindungsabschnitte 22 bilden ein Paar, in dem sie bezüglich der Längsachse 14 diametral entgegengesetzt zueinander angeordnet sind.

Der zweite Anschlussbereich 20 weist zwei entgegengesetzt zueinander und insoweit in einem Winkelabstand von 180° angeordnete zweite Verbindungsabschnitte 24 auf, die durch an das Gehäuse 12 angeformte ohrenartige Laschen ausgestaltet sind. Auch die beiden zweiten Verbindungsabschnitte 24 bilden insoweit ein Paar, als sie bezüglich der Längsachse 14 diametral entgegengesetzt zueinander angeordnet sind. Bei einer nicht dargestellten Ausführungsform weist der zweite Anschlussbereich lediglich einen einzigen zweiten Verbindungsabschnitt auf.

Die ersten Verbindungsabschnitte 22 weisen jeweils eine als zylindrisches Sackloch ausgebildete erste Öffnung 26 auf, die längs einer ersten Öffnungsachse 28 verläuft. Die erste Öffnungsachse 28 ist gegenüber der Längsachse 14 sowohl in radialer Richtung als auch in Umfangsrichtung leicht abgewinkelt, was in den Figuren 1, 2 und 5 durch einen Pfeil mit dem Bezugszeichen 30 angedeutet ist. Die ersten Öffnungen 26 sind mit einem Innengewinde (ohne Bezugszeichen) versehen. Die zu dem ersten Anschlussbereich 18 benachbarten Stirnseiten der ersten Verbindungsabschnitte 22 sind mit der im ersten Anschlussbereich 18 liegenden Stirnseite des Gehäuses 12 plan und rechtwinklig zur Längsachse 14 ausgebildet (siehe auch Figuren 3-5).

Die ösenartigen zweiten Verbindungsabschnitte 24 weisen jeweils eine durchgehende, gewindelose und zylindrisch ausgebildete zweite Öffnung 32 auf, die längs einer zweiten Öffnungsachse 34 verläuft. Die zweite Öffnungsachse 34 ist gegenüber der Längsachse 14 sowohl in radialer Richtung als auch in Umfangsrichtung leicht abgewinkelt, was in den Figuren 1, 2 und 5 durch einen Pfeil 35 angedeutet ist. Der Winkel der ersten Öffnungsachse 28 gegenüber der Längsachse 14 ist identisch zu dem Winkel der zweiten Öffnungsachse 34 gegenüber der Längsachse 14. Die zu dem zweiten Anschlussbereich 20 benachbarten Stirnseiten der zweiten Verbindungsabschnitte 24 sind mit der im zweiten Anschlussbereich 20 liegenden Stirnseite des Gehäuses 12 plan und rechtwinklig zur Längsachse 14 (siehe auch Figuren 3-5) .

Wie insbesondere aus den Figuren 2, 3 und 4 ersichtlich ist, weist das Gehäuse 12 einen als im Wesentlichen zylindrischer Fortsatz ausgebildeten Anschlussabschnitt 36 auf, welcher, wie weiter unten noch im Zusammenhang mit einer anderen Ausführungsform dargelegt werden wird, zum Anschließen eines Ventilantriebs dient. Der Anschlussabschnitt 36 weist eine Längsachse 38 auf, welche orthogonal zur Längsachse 14 des Gehäuses 12 ist. Der Anschlussabschnitt 36 ist hohl und mündet in den Hauptkanal 16. Er ist mit einem Innengewinde (ohne Bezugszeichen) versehen (Figur 4). Ein an den Anschlussabschnitt 36 anzuschließender Ventilantrieb umfasst ein Ventilelement, mit dem der Hauptkanal 16 wahlweise gesperrt oder geöffnet werden kann. Ein solches Ventilmodul 10 ist dann ein 2/2-Wegeventil.

Zwei Ventilmodule 10 des in den Figuren 1 bis 5 dargestellten Typs können aneinander wie folgt befestigt werden: der stutzenartige zweite Anschlussbereich 20 des einen Ventilmoduls 10 wird in den muffenartigen ersten Anschlussbereich 18 des anderen Ventilmoduls 10 gesteckt.

Zum Zwecke der Fluidabdichtung können in den Figuren nicht gezeigte O-Ring-Dichtungen vorgesehen sein. Die planen Stirnflächen der ersten und zweiten Anschlussbereiche 18 und 20 und der ersten und zweiten Verbindungsabschnitte 22 und 24 liegen nun aneinander an.

Dann werden die beiden Ventilmodule 10 relativ zueinander um die gemeinsame Längsachse 14 so verdreht, dass eines der beiden Paare von ersten Verbindungsabschnitten 22 des einen Ventilmoduls 10 exakt benachbart zu dem Paar von zweiten Verbindungsabschnitten 24 des anderen Ventilmoduls 10 liegt, und zwar derart, dass die ersten Öffnungen 26 des gewählten Paares von ersten Verbindungsabschnitten 22 exakt mit den zweiten Öffnungen 32 des Paares von zweiten Verbindungsabschnitten 24 fluchten. Diese Relativlage eines ersten Verbindungsabschnitts 22 zu einem zweiten Verbindungsabschnitt 24 so, dass diese miteinander verbunden werden können, wird als "Verbindungsposition" bezeichnet. Es ist offensichtlich, dass bei insgesamt vier ersten Verbindungsabschnitten 22 vier Verbindungspositionen möglich sind, die sich durch um 90° unterschiedliche relative Winkellagen der Ventilmodule 10 voneinander unterscheiden.

Dann werden Schrauben in die zweiten Öffnungen 32 eingesteckt und in die ersten Öffnungen 26 eingeschraubt, wodurch die einander zugewandten und plan aneinander anliegenden Stirnflächen der beiden Ventilmodule 10 gegeneinander gepresst werden.

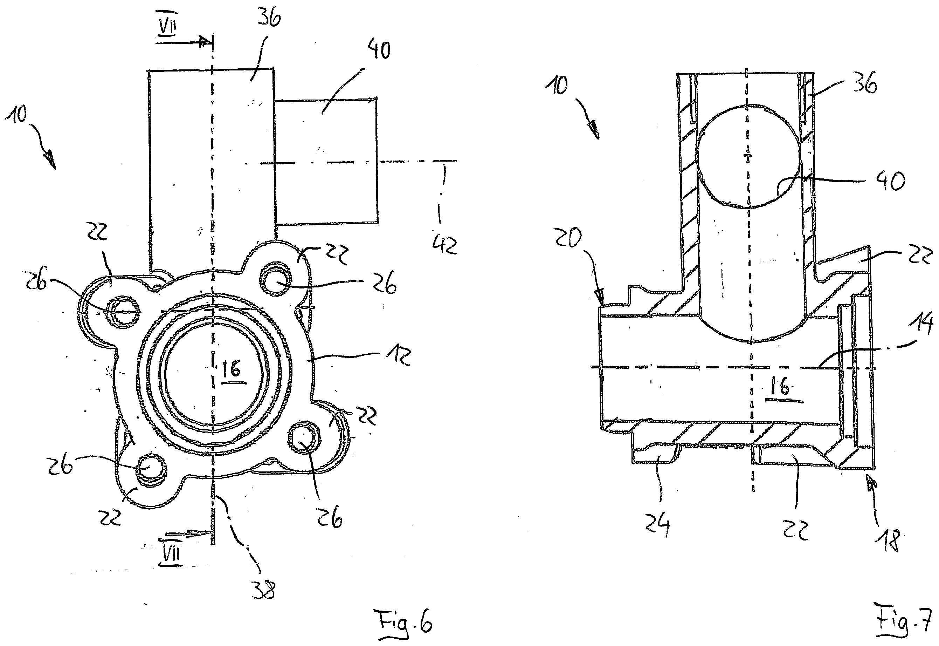

Eine andere Ausführungsform eines Ventilmoduls 10 wird nun unter Bezugnahme auf die Figuren 6 bis 8 erläutert. Dabei tragen solche Elemente und Bereiche, welche funktionsäquivalent sind zu Elementen und Bereichen der in den Figuren 1 bis 5 beschriebenen Ausführungsform, die gleichen Bezugszeichen. Sie werden der Einfachheit halber nicht mehr im Detail erläutert.

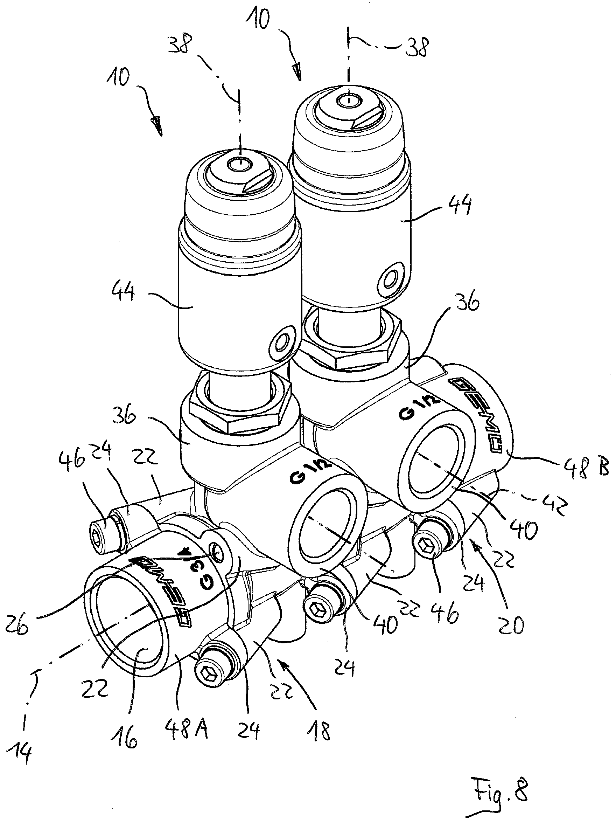

Das in den Figuren 6 bis 8 gezeigte Ventilmodul 10 unterscheidet sich von jenem der Figuren 1 bis 5 insbesondere durch die Ausgestaltung des Anschlussabschnitts 36. Dieser weist einen Anschlussstutzen 40 auf, der eine Längsachse 42 hat, die orthogonal sowohl in Bezug auf die Längsachse 38 des Anschlussabschnitts 36 als auch die Längsachse 14 des Gehäuses 20 ist. An den Anschlussstutzen 40 kann eine Fluidleitung (nicht dargestellt) angeschlossen werden.
Beispielsweise in Figur 8 sind zwei derartige Ventilmodule 10 dargestellt, die aneinander befestigt sind und an deren Anschlussabschnitt 36 jeweils ein Ventilantrieb 44 befestigt ist. Der Ventilantrieb 44 ist vorliegend als elektromotorisch betätigter Ventilantrieb ausgeführt, es kann sich aber genauso gut auch um einen manuellen Ventilantrieb oder einen pneumatisch betätigten Ventilantrieb handeln. Durch die Ventilantriebe 44 kann die Verbindung vom Hauptkanal 16 zum Anschlussstutzen 40 gesperrt oder freigegeben werden. Bei diesen Ventilmodulen 10 handelt es sich also um 3/2-Wegeventile.

In Figur 8 sind auch die Schrauben 46 gezeichnet, die durch die zweiten Verbindungsabschnitte 24 hindurchgesteckt und in die ersten Verbindungsabschnitte 22 eingeschraubt werden. Aus Gründen der Übersichtlichkeit sind allerdings nicht alle Schrauben 46 mit einem Bezugszeichen versehen. Man erkennt, dass diese Schrauben 46 auch bei aneinander befestigten Ventilmodulen 10 jederzeit zugänglich sind, und zwar wegen der Winkel 30 und 35.

Ferner sind in Figur 8 zwei Flanschelemente 48 A und 48 B gezeigt, von denen das in Figur 8 linke Flanschelement 48 A zweite Verbindungsabschnitte 24 aufweist, so dass es am ersten Anschlussbereich 18 bzw. den ersten Verbindungsabschnitten 22 des in Figur 8 linken Ventilmoduls 10 befestigt werden kann, und von denen das in Figur 8 rechte Flanschelement 48 B erste Verbindungsabschnitte 22 aufweist, so dass es am zweiten Anschlussbereich 20 bzw. den zweiten Verbindungsabschnitten 24 des in Figur 8 rechten Ventilmoduls 10 befestigt werden kann. Die Flanschelemente 48 A und 48 B dienen zur einfacheren Befestigung einer entsprechenden Fluidleitung.

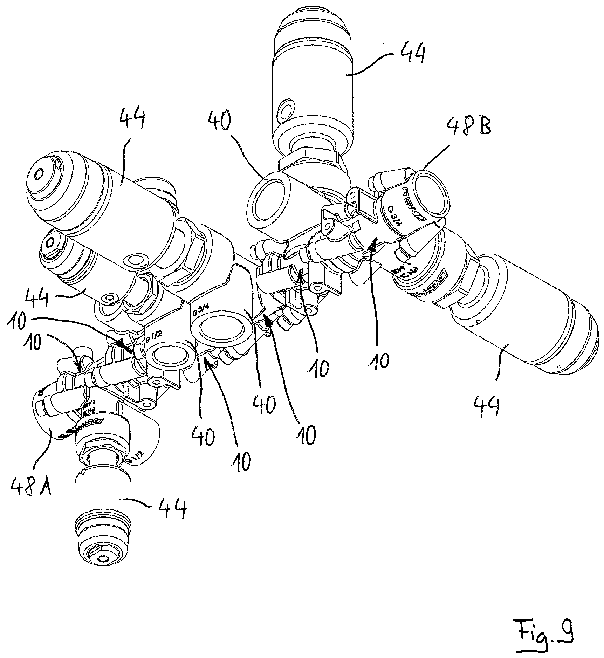

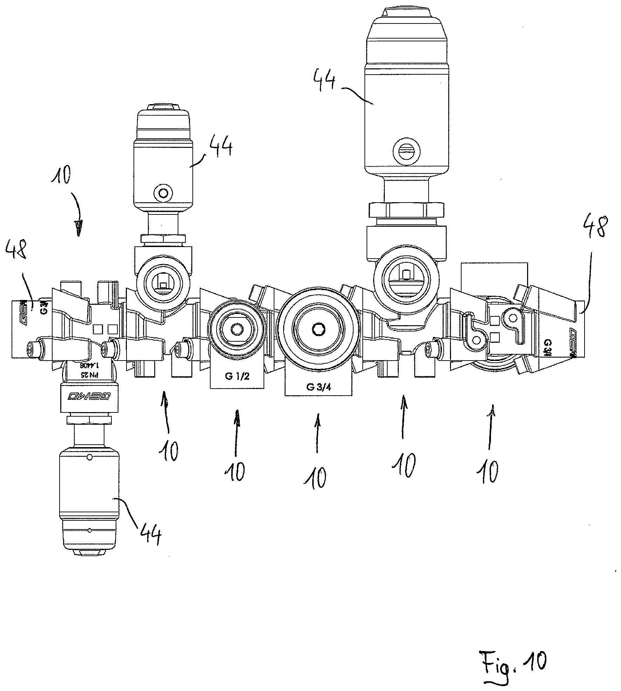

In den Figuren 9 und 10 ist eine Anordnung von insgesamt sechs Ventilmodulen 10 der in den Figuren 5 bis 7 beschriebenen Art gezeichnet. Dabei sind die Ventilmodule 10 zueinander in unterschiedlichen Winkellagen angeordnet, d.h., dass die Anschlussabschnitte 36 und die Ventilantriebe 44 und auch die Anschlussstutzen 40 zumindest zum Teil unterschiedlich ausgerichtet sind.

Bei den oben beschriebenen Ausführungsformen liegen bei aneinander montierten Ventilmodulen die ersten und zweiten Verbindungsabschnitte, die sich in einer Verbindungsposition befinden, direkt aneinander an. Bei einer nicht gezeigten Ausführungsform können diese aber auch in Richtung der Längsachse des Gehäuses gesehen voneinander beabstandet sein. Ferner ist eine Ausführungsform denkbar, bei der die erste Öffnungsachse und die zweite Öffnungsachse in der Verbindungsposition nicht miteinander fluchten, sondern nebeneinander und parallel zueinander angeordnet sind. Dies gestattet die Verbindung beispielsweise mittels eines Klemmbügels oder mittels einer Bügelschraube.

Ferner sind Ausführungsformen denkbar, bei denen die Verbindungsabschnitte in Umfangsrichtung gesehen nicht gleichmäßig verteilt angeordnet sind. Auch können beispielsweise lediglich drei erste Verbindungsabschnitte und lediglich ein einziger zweiter Verbindungsabschnitt vorgesehen sein. In diesem Fall sind dann lediglich drei unterschiedliche relative Winkellagen zweier miteinander verbundener Ventilmodule möglich.

Ferner ist denkbar, dass der erste Anschlussbereich und der zweite Anschlussbereich nicht als Stutzen und Muffe ausgebildet sind, sondern als identische plane Stirnflächen, die beispielsweise mittels einer Axialdichtung abgedichtet sind. In diesem Fall ist es besonders einfach, ein einzelnes Ventilmodul aus einer Anordnung von mehreren Ventilmodulen herauszunehmen, beispielsweise für Wartungszwecke, und es anschließend wieder einzusetzen und zu befestigen.

## Patentansprüche

1. Ventilmodul (10), mit einem Gehäuse (12) mit einer Längsachse (14), wobei sich das Gehäuse (12) von einem ersten Anschlussbereich (18) zu einem zweiten Anschlussbereich (20) erstreckt, der zu dem ersten Anschlussbereich (18) komplementär ausgebildet ist, wobei der erste Anschlussbereich (18) mindestens einen ersten Verbindungsabschnitt (22) und der zweite Anschlussbereich (20) mindestens einen zweiten Verbindungsabschnitt (24) aufweist, wobei der erste Verbindungsabschnitt (22) so angeordnet und ausgebildet ist, dass er mit dem zweiten Verbindungsabschnitt (24) eines im Hinblick auf die Verbindungsabschnitte (22, 24) im Wesentlichen identischen zweiten Ventilmoduls (10) so koppelbar ist, dass die beiden Ventilmodule (10) aneinander festgelegt sind, wobei der erste Anschlussbereich (18) mindestens drei erste Verbindungsabschnitte (22) aufweist und diese und der mindestens eine zweite Verbindungsabschnitt (24) derart ausgebildet und angeordnet sind, dass das Ventilmodul (10) mit dem zweiten Ventilmodul (10) in Umfangsrichtung um die Längsachse (14) gesehen in unterschiedlichen Stellungen verbindbar ist, wobei in den jeweiligen Stellungen der mindestens eine zweite Verbindungsabschnitt (24) des Ventilmoduls (10) jeweils gegenüber einem unterschiedlichen ersten Verbindungsabschnitt (22) des zweiten Ventilmoduls (10) in einer Verbindungsposition (VP) steht, **dadurch gekennzeichnet, dass** die ersten Verbindungsabschnitte (22) durch an das Gehäuse (12) angeformte und in etwa zylindrische Erweiterungen ausgestaltet sind, und dass die zweiten Verbindungsabschnitte (24) durch an das Gehäuse (12) angeformte ohrenartige Laschen ausgestaltet sind.

2. Ventilmodul (10) nach Anspruch 1, **dadurch gekennzeichnet, dass** der mindestens eine zweite Verbindungsabschnitt (24) eine, vorzugsweise zylindrisch ausgebildete, zweite Öffnung (32) mit einer zweiten Öffnungsachse (34) aufweist.

3. Ventilmodul (10) nach einem der vorhergehenden Ansprüche, **dadurch gekennzeichnet, dass** die ersten Verbindungsabschnitte (22) je eine, vorzugsweise zylindrisch ausgebildete, erste Öffnung (26) mit je einer ersten Öffnungsachse (28) aufweisen.

4. Ventilmodul (10) nach Anspruch 3, **dadurch gekennzeichnet, dass** entweder die ersten Öffnungen (26) oder die mindestens eine zweite Öffnung (32) jeweils ein Innengewinde aufweisen.

5. Ventilmodul (10) nach einem oder mehreren der vorangegangenen Ansprüche, **dadurch gekennzeichnet, dass** der erste Anschlussbereich (18) mindestens vier erste Verbindungsabschnitte (22) aufweist, von denen je zwei erste Verbindungsabschnitte (22) ein Paar bilden, und der zweite Anschlussbereich (20) mindestens zwei zweite Verbindungsabschnitte (24) aufweist, die ein Paar bilden, wobei Verbindungsabschnitte (22, 24) eines Paares jeweils bezüglich der Längsachse (14) diametral gegenüberliegend voneinander angeordnet sind.

6. Ventilmodul (10) nach Anspruch 5, **dadurch gekennzeichnet, dass** die vier ersten Verbindungsabschnitte (22) in Umfangsrichtung um die Längsachse (14) gleichmäßig verteilt angeordnet sind, sodass die vier Stellungen, in welchen das Ventilmodul (10) mit einem im Wesentlichen im Hinblick auf die Verbindungsabschnitte (22, 24) identischen zweiten Ventilmodul (10) verbindbar ist, jeweils um 90° versetzt zueinander sind.

7. Ventilmodul (10) nach einem oder mehreren der vorangegangenen Ansprüche, **dadurch gekennzeichnet, dass** es einen Anschlussabschnitt (36) zum Anschließen eines Ventilantriebs (44) umfasst, welcher vorzugsweise eine Längsachse (38) aufweist, die orthogonal zur Längsachse (14) des Gehäuses (12) ist.

## Claims

1. Valve module (10) having a housing (12) with a longitudinal axis (14), wherein the housing (12) extends from a first connection region (18) to a second connection region (20) which is configured so as to be complementary to the first connection region (18), wherein the first connection region (18) has at least one first connection section (22) and the second connection region (20) has at least one second connection section (24), wherein the first connection section (22) is arranged and configured such that it can be coupled with the second connection section (24) of a second valve module (10) which is substantially identical with respect to the connection sections (22, 24) such that the two valve modules (10) are fixed to one another, wherein the first connection region (18) has at least three first connection sections (22) and these, and the at least one second connection section (24), are configured and arranged such that the valve module (10) can be connected with the second valve module (10) in different positions, viewed in a circumferential direction around the longitudinal axis (14), wherein, in the respective positions, the at least one second connection section (24) of the valve module (10) is in each case in a connection position (CP) in relation to a different first connection section (22) of the second valve module (10), **characterised in that** the first connection sections (22) are formed through roughly cylindrical extensions formed on the housing (12), and that the second connection sections (24) are formed through ear-like brackets formed on the housing (12).

2. Valve module (10) according to claim 1, **characterised in that** the at least one second connection section (24) has a preferably cylindrically formed second opening (32) with a second opening axis (34).

3. Valve module (10) according to one of the preceding claims, **characterised in that** the first connection sections (22) in each case have a preferably cylindrically formed first opening (26) with in each case a first opening axis (28).

4. Valve module (10) according to claim 3, **characterised in that** either the first openings (26) or the at least one second opening (32) in each case have an inner thread.

5. Valve module (10) according to one or more of the preceding claims, **characterised in that** the first connection region (18) has at least four first connection sections (22), of which in each case two first connection sections (22) form a pair, and the second connection region (20) has at least two second connection sections (24) which form a pair, wherein connection sections (22, 24) of a pair are in each case arranged diameterically opposite one another in relation to the longitudinal axis (14) .

6. Valve module (10) according to claim 5, **characterised in that** the four first connection sections (22) are distributed equidistantly in a circumferential direction around the longitudinal axis (14), so that the four positions in which the valve module (10) can be connected with a second valve module (10) which is substantially identical with respect to the connection sections (22, 24) are in each case offset in relation to one another by 90°.

7. Valve module (10) according to one or more of the preceding claims, **characterised in that** it comprises a connection point (36) for the connection of a valve drive (44) which preferably has a longitudinal axis (38) oriented orthogonally to the longitudinal axis (14) of the housing (12).

## Revendications

1. Module de vannes (10), avec un boîtier (12) avec un axe longitudinal (14), le boîtier (12) s'étendant depuis une première zone de connexion (18) à une seconde zone de connexion (20) qui est conçue complémentaire à la première zone de connexion (18), la première zone de connexion (18) présentant au moins une première partie de raccordement (22) et la seconde zone de connexion (20) présentant au moins une seconde partie de raccordement (24), la première partie de raccordement (22) étant disposée et conçue de sorte à pouvoir être couplée à la seconde partie de raccordement (24) d'un second module de vannes (10) qui est essentiellement identique en ce qui concerne les parties de raccordement (22, 24), afin que les deux modules de vannes (10) soient fixés l'un à l'autre, la première zone de connexion (18) présentant au moins trois premières parties de raccordement (22), celles-ci et l'au moins une seconde partie de raccordement (24) étant conçues et disposées de sorte que le module de vannes (10) puisse être relié au second module de vannes (10) dans différentes positions, vu dans le sens circonférentiel autour de l'axe longitudinal (14), dans les positions respectives, l'au moins une seconde partie de raccordement (24) du module de vannes (10) étant, respectivement par rapport à une première partie de raccordement différente (22) du second module de vannes (10), en position de connexion (VP), **caractérisé en ce que** les premières parties de raccordement (22) sont conçues en forme d'élargissements à peu près cylindriques formés sur le boîtier (12) et **en ce que** les secondes parties de raccordement (24) sont conçues comme languettes en forme d'oreille formées sur le boîtier (12).

2. Module de vannes (10) suivant la revendication 1, **caractérisé en ce que** l'au moins une seconde partie de raccordement (24) présente une seconde ouverture (32) conçue de préférence cylindrique avec un second axe d'ouverture (34).

3. Module de vannes (10) suivant une quelconque des revendications précédentes, **caractérisé en ce que** les premières parties de raccordement (22) présentent respectivement une première ouverture (26) conçue de préférence cylindrique avec respectivement un premier axe d'ouverture (28).

4. Module de vannes (10) suivant la revendication 3, **caractérisé en ce que** soit les premières ouvertures (26) soit l'au moins une seconde ouverture (32) présentent respectivement un taraudage.

5. Module de vannes (10) suivant une ou plusieurs des revendications précédentes, **caractérisé en ce que** la première zone de connexion (18) présente au moins quatre premières parties de raccordement (22), dont respectivement deux premières parties de raccordement (22) forment une paire et **en ce que** la seconde zone de connexion (20) présente au moins deux secondes parties de raccordement (24) qui forment une paire, les parties de raccordement (22, 24) d'une paire étant respectivement disposées diamétralement opposées l'une à l'autre par rapport à l'axe longitudinal (14).

6. Module de vannes (10) suivant la revendication 5, **caractérisé en ce que** les quatre premières parties de raccordement (22) sont disposées uniformément réparties dans le sens circonférentiel autour de l'axe longitudinal (14), de sorte que les quatre positions, dans lesquelles le module de vannes (10) peut être raccordé à un second module de vannes (10) essentiellement identique en ce qui concerne les parties de raccordement (22, 24), soient décalées entre elles de 90° respectivement.

7. Module de vannes (10) suivant une ou plusieurs des revendications précédentes, **caractérisé en ce qu'**il comprend une partie de connexion (36) pour raccorder un entraînement de vannes (44) qui présente de préférence un axe longitudinal (38) orthogonal à l'axe longitudinal (14) du boîtier (12).
